# EUROPEAN PATENT SPECIFICATION

(11) **EP 4 059 581 B1**
(45) Date of publication and mention of the grant of the patent: **30.09.2026**
(21) Application number: 21162897.9
(22) Date of filing: 16.03.2021
(51) Int. Cl.: A63F 13/25, A63F 13/21, A63F 13/26, A63F 13/52, G02B 27/01, G02B 30/40, H04N 13/128

(54) **METHOD AND SYSTEM TO REDUCE VR SICKNESS IN A CLOUD GAME SERVICE**
VERFAHREN UND SYSTEM ZUR VERMINDERUNG DER VR-KRANKHEIT IN EINEM CLOUD-SPIELDIENST
PROCÉDÉ ET SYSTÈME POUR RÉDUIRE LA CINÉTOSE RV DANS UN SERVICE DE JEU CLOUD

(43) Date of publication of application: 21.09.2022
(73) Proprietor: Deutsche Telekom AG, 53113 Bonn (DE)
(72) Inventor: YUN, Harrison Hongseo, 12203 Berlin (DE); JUNG, Darrell Kwangil, 10785 Berlin (DE); HELMUT, Vivien, 12309 Berlin (DE); BUCHHOLZ, Thomas, 10317 Berlin (DE)
(74) Representative: Vossius & Partner Patentanwälte Rechtsanwälte mbB

(56) References cited:
- US-A1- 2018 205 931
- US-A1- 2018 307 304
- US-B1- 9 858 637

## Description

The invention relates to a method and a system to reduce virtual reality, VR, sickness. In particular, the invention relates to a method and a system to reduce VR sickness in VR environments in which the user is able to move its "virtual twin" and change its field of view fast.

US 9 858 637 B1 relates to systems, methods, and computer programs for reducing motion-to-photon latency and memory bandwidth in a virtual reality display system. An exemplary method involves receiving sensor data from one or more sensors tracking translational and rotational motion of a user for a virtual reality application.

In a VR environment, the user experience is enhanced and improved by having many immersive VR features such as a stereoscopic 3D image, a bigger and wider screen display, and head-movement based control.

These VR features are in particular relevant for gaming applications. In many gaming genres such as action, role-playing, and simulation, a PC game player is continuously forced to move his/her character's position mostly in the forward direction in the game scenarios.

Although this positional movement of character or PC gamer's view is well-accepted and performed by PC gaming players, while viewing through the PC monitor system, its movement apparently comes up with VR sickness when viewing through VR HMD devices.

The main reason is rooted in the well-known "motion-sensing conflict" problem, which occurs when there is a mismatch between vision signal generated from human eyes and motion signal generated from human vestibular organ.

Unless a motion signal can be generated and delivered to the brain when the VR user is virtually moving, i.e. a change of the user's position and field of view in a virtual world, the user will be easily exposed to suffer from VR sickness. The inventors realized that in this "motion-sensing conflict" problem, the level of VR sickness is highly correlated with the level of immersive experience.

Moreover, cloud gaming services have become widely available. In particular 5G based cloud-rendered gaming services are now available. In said gaming services, such as MagentaGaming, a customer can enjoy playing a game anytime and anywhere without deploying an expensive gaming PC system at home. The invention is defined by the appended claims.

The target devices to play gaming services comprise a PC monitor, a smart phone display, and a big TV screen. However, cloud gaming services may be combined with VR technology and result in a more immersive user experience than typical PC gaming. The target devices for gaming may comprise VR Head-mount-display, HMD, devices, preferably a glasses type device, in addition or as an alternative to a conventional monitor system.

It is noted that the motion-sensing conflict may occur in both conventional gaming systems and cloud-based gaming systems. The invention relates to both conventional gaming systems and cloud-based gaming services. In general, the invention is described in terms of a conventional gaming system, wherein specific elements will be also described in terms of a cloud-based gaming system.

In other words, a conventional gaming system and cloud rendered gaming service can be upgraded to a more immersive experience by combining it with VR technologies. However, such conversion of stereoscopic 3D and displaying thereof in a VR HMD device, in return, results in the VR user suffering from VR sickness when he/she moves in the VR environment.

For a cloud rendered gaming service the problem remains the same, but additional latency caused by the cloud architecture may increase the severity of the VR sickness.

Hereinafter different movements are discussed. The VR user can move in the real world, i.e. the body or parts thereof are moving in certain direction. The VR user can also move in the virtual world, i.e. the VR user has a speed and/or acceleration in the virtual world. As described above the relative difference between the real-world movement and the virtual world movement may cause the VR sickness. Unless specifically stated otherwise or otherwise apparent from the respective context, hereinafter the terms speed and acceleration of the VR user always refers to the speed and acceleration in the virtual world. There are several methods to control the movement of the VR user in the virtual world, which will be detailed below.

Accordingly, it is an objective of the present invention to provide a method and system, which reduces VR sickness, preferably in a cloud gaming service, more preferably, when a VR user moves in the respective cloud gaming service.

According to an embodiment of the invention the invention, there is provided a method for controlling a virtual reality, VR, device, comprising the steps of
a) generating a controller input with a controller device and/or with a tracking sensor of the VR device;
b) calculating, based on the controller input a speed and/or acceleration of a VR user in an VR environment;
d) adaptively controlling one or more post-processing transactions based on the speed and/or acceleration of the VR user; and
e) transferring the rendered VR data on the VR device for displaying.

According to an embodiment of the invention the invention, there is further provided a method for controlling a virtual reality, VR, device, in a cloud environment comprising the steps of
a) generating a controller input with a controller device and/or with a tracking sensor of the VR device;
b) transferring the controller input to a server in the cloud environment;
c) calculating, in the cloud environment, based on the controller input, a speed and/or acceleration of a VR user in an VR environment;
d) adaptively controlling one or more post-processing transactions based on the speed and/or acceleration of the VR user; and
e) transmitting rendered VR data from the cloud environment; to the VR device for displaying.

According to an aspect of the invention, depending on the speed and/or acceleration of the VR user, the level of stereoscopic 3D depth is controlled and applied to its rendering post-processing; and/or wherein at the maximum speed of positional movement a monoscopic image is rendered.

According to an aspect of the invention, depending on the speed and/or acceleration of VR user, the size of tunneling effect is controlled and applied to its rendering post-processing; and/or wherein at the maximum speed of positional movement, the size of tunneling effect is increased at the maximum level.

According to an aspect of the invention, a reduction or removal of stereoscopic 3D depth and the size of the tunneling effect is linearly changed based on a weight factor; and/or when a threshold is reached.

According to an aspect of the invention, the VR device is a head mounted device, preferably a glasses type device.

According to an embodiment of the invention the invention, there is further provided a system for controlling a virtual reality, VR, device, comprising
a) a controller unit configured to receive a controller input generated from a controller device and/or a tracking sensor of the VR device;
b) a calculation unit configured to receive, based on the controller input a speed and/or acceleration of a VR user in an VR environment;
d) a post-processing unit configured to adaptively control one or more post-processing transactions based on the speed and/or acceleration of the VR user; and
e) an output unit configured to transfer the rendered VR data on the VR device for displaying.

According to an embodiment of the invention the invention, there is further provided a system for controlling a virtual reality, VR, device, in a cloud environment comprising the steps of
a) a controller unit, configured to receive a controller input generated from a controller device and/or with a tracking sensor of the VR device;
b) the controller unit further configured to transfer the controller input to a server in the cloud environment;
c) a calculation unit, in the cloud environment, configured to calculate based on the controller input, a speed and/or acceleration of a VR user in an VR environment;
d) a post-processing unit, in the cloud environment, configured to adaptively control the post-processing transactions based on the speed and/or acceleration of the VR user; and
e) an output unit, in the cloud environment, configured to transmit rendered VR data from the cloud environment; to the VR device for displaying.

According to an aspect of the invention, the system according to the invention, comprises means for carrying out the steps of the method according to any one of the preceding embodiments and aspects of the invention.

According to an embodiment of the invention the invention, there is further provided a computer program product comprising instructions which, when the program is executed by a system according the invention, cause the system to carry out the steps of the method according to any one of the preceding embodiments and aspects of the invention.

According to an embodiment of the invention the invention, there is further provided a computer-readable storage medium comprising instructions which, when executed by a system according to the invention, cause the system to carry out the steps of the method according to any one of the preceding embodiments and aspects of the invention.

It is a general aspect of the invention to adaptively control the level of stereoscopic 3D depth and/or the size of tunneling effect rendering.

First, a depth of the stereoscopic 3D view is reduced or removed so that a VR user only sees a monoscopic view, i.e. the same image is presented for both eyes, while moving in the VR environment.

Secondly, a size of tunneling effect is changed, preferably linearly changed, while a VR user moves in the VR environment.

Thirdly, a reduction or removal of stereoscopic 3D depth and the size of the tunneling effect will be linearly changed and decided based on the speed and/or acceleration of the VR user's positional movement in the virtual world.

Thus, according to the invention VR sickness is removed, or at least reduced, by mitigating the level of immersive experience, instead of solving the motion-sensing conflict problem by generating a motion signal from human's vestibular organ in VR service.

For VR applications many kinds of controller are conceivable. Examples are a common hand controller for VR glasses, a gaming controller, a sensor mat recognizing steps, a treadmill, a camera system recognizing gestures, or speech control.

While different control methods may be used in embodiments of the invention, the corresponding calculation of speed and/or acceleration is essentially the same.

In a preferred embodiment of the invention, the speed and/or acceleration is calculated based on information directly obtainable from an input of the controller. Preferably, the input relates to information about which key is pressed and how often or how long it is pressed. Different types of controller may create different input signals, however in said embodiment said input signal is directly used to calculate a speed and acceleration of the VR user in the virtual world. Optionally, a further input of the VR application is processed to calculate the speed and/or acceleration. The further input may be calibration data for a specific controller.

Alternatively, or additionally the VR application provides information on the speed and/or acceleration as an output. That is, the controller signal is first processed by the VR application and the speed and/or acceleration is outputted by the VR application.

### Brief description of the drawings

The above-described objects, advantages and features of the present invention, as well as others, will be more readily understood from the following detailed description of certain preferred embodiments of the invention, when considered in conjunction with the accompanying drawings in which:
Fig. 1 shows a high-level architecture of a method and a system of a typical cloud-based gaming service;
Fig. 2 shows a high-level architecture of an initialization of a method and a system according to an embodiment of the invention;
Fig. 3 shows a high-level architecture of a calculation of a weight factor of a method and a system according to an embodiment of the invention;
Fig. 4 shows a high-level architecture of an initialization of a method and a system according to a further embodiment of the invention;
Fig. 5 shows a high-level architecture of a method and a system according to an embodiment of the invention;
Fig. 6 shows a high-level architecture of a method and a system according to a further embodiment of the invention;
Fig. 7 shows a high-level architecture of a method and a system without a cloud according to a further embodiment of the invention; and
Fig. 8 shows a flow chart of a method according to an embodiment of the invention;

### Detailed description of the drawings

In the following, embodiments of the invention will be described. It is noted that some aspects of any one of the described embodiments may also be found in some other embodiments unless otherwise stated or obvious. However, for increased intelligibility, each aspect will only be described in detail when first mentioned and any repeated description of the same aspect will be omitted.

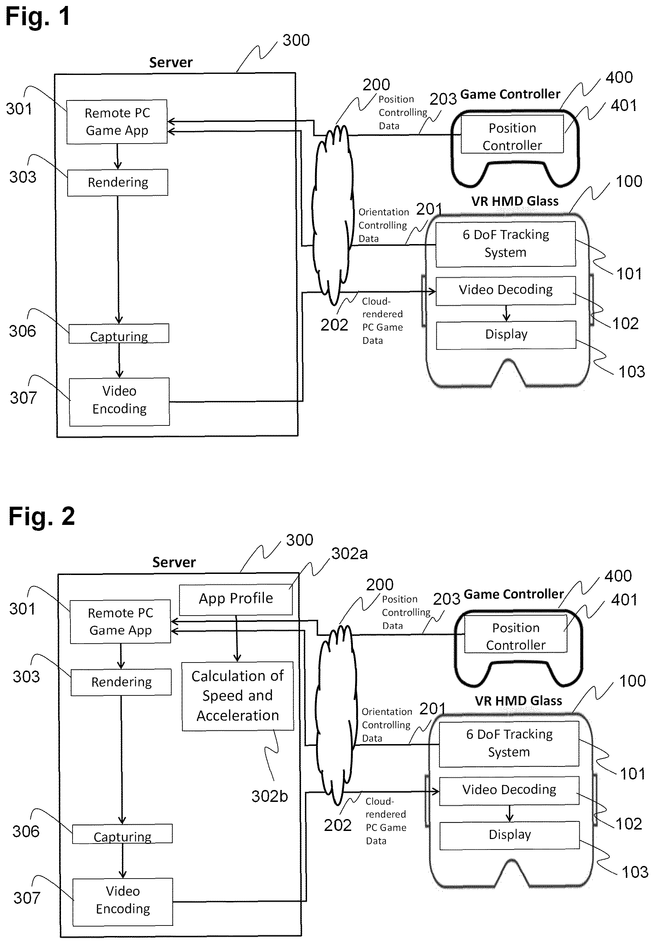

Fig. 1 shows a high-level architecture of a method and a system of a typical cloud-based gaming service. The system comprises a game controller 400, a VR HMD device 100, a cloud 200, and a server 300. The game controller 400 sends position controlling data 203 to the cloud, the data is transferred from the cloud to the server 300. At the server 300 an application 301, preferably a remote PC and/or game App receives the position controlling date. Additionally, or alternatively the VR HMD device may comprise a position sensing system, preferably a six degrees of freedom, 6-DoF, tracking sensor system. The 6-DOF system 101 generates orientation controlling data 201, which is sent to the cloud 200 and also transferred to the application 301 on the server 300.

At the server 300 an output of the application 301 is generated based on the received data, said data is then rendered 303, captured 306, and the encoded 307 into a video signal. The encoded data 202 is then transferred from the server via the cloud 200 to the VR HMD device 100. At the VR HMD device 100 the received data is decoded 102 and displayed 103.

In an embodiment of the invention, a speed and/or acceleration of a VR user are calculated and fed into further post-processing transactions, such as real-time stereoscopic 3D conversion and adaptive tunneling effect rendering. As detailed above different inputs may be used to determine the speed and/or acceleration of the VR user.

Typical applications are rendered and displayed to a PC monitor based on monoscopic images. Since they are based on 3D modelling, depth information is available from the 3D model as well.

So, through a respective post processing transaction according to the invention, the monoscopic images are converted into stereoscopic 3D images by combining them with the depth information on a real-time basis.

In an embodiment of the invention, in the post processing, a mask image with a hole, preferably elliptical transparent center, will be rendered and overlapped on each of frames of PC game application. Preferably, the mask image is transparent, more preferably the mask image has transparent circular center with soft edges and/or dark/black margin.

This will result in the tunneling effect, where the center of the frame will be clearly displayed while the boundary area of the frame will be displayed obscured, preferably as black or darker, depending on a respective transparency parameter.

According to an embodiment of the invention, the post processing is performed using one or more of the following items:
(1) Depending on a speed and/or acceleration of the VR user in the virtual world, the level of stereoscopic 3D depth is decided and applied on the respective 3D conversion post processing. At a maximum speed of positional movement, it is preferred to render a monoscopic image, i.e. the same image for each eye.
(2) Depending on speed and/or acceleration of VR user in the virtual world, the size of tunneling effect is decided and applied to the respective rendering post-processing. At the maximum speed of positional movement, it is preferred to increase the tunneling effect to the maximum level.
(3) The combination of controlling of the level of stereoscopic 3D depth and the tunneling effect is applied.

The method according to an embodiment of the invention reduces a VR sickness when a VR user moves in a positional direction in his/her VR service by decreasing the level of VR immersive experience. The degree of decreasing the level of VR immersive experience is preferably controlled by thresholds and/or weight factors as will be detailed below. According to the invention, an interface is provided to control said thresholds and/or weight factors by the user.

Fig. 2 shows a high-level architecture of an initialization of a method and a system according to an embodiment of the invention. The same reference signs as in Fig. 1 are used for the corresponding features in Fig. 2. In an embodiment of the invention, before the speed and/or acceleration of a VR user is calculated the calculation 302b is initialized. The initialization may be based on an app profile 302a. Said app profile 302a can be stored on the server 300 or in the controller, not shown. The app profile 302a may be application specific and/or controller specific. The app profile 302a comprises data, which allows to initialize the calculation of the speed and/or acceleration such that at a later stage the raw input of the controller can be used to determine the speed and/or acceleration of a VR user in the application 301.

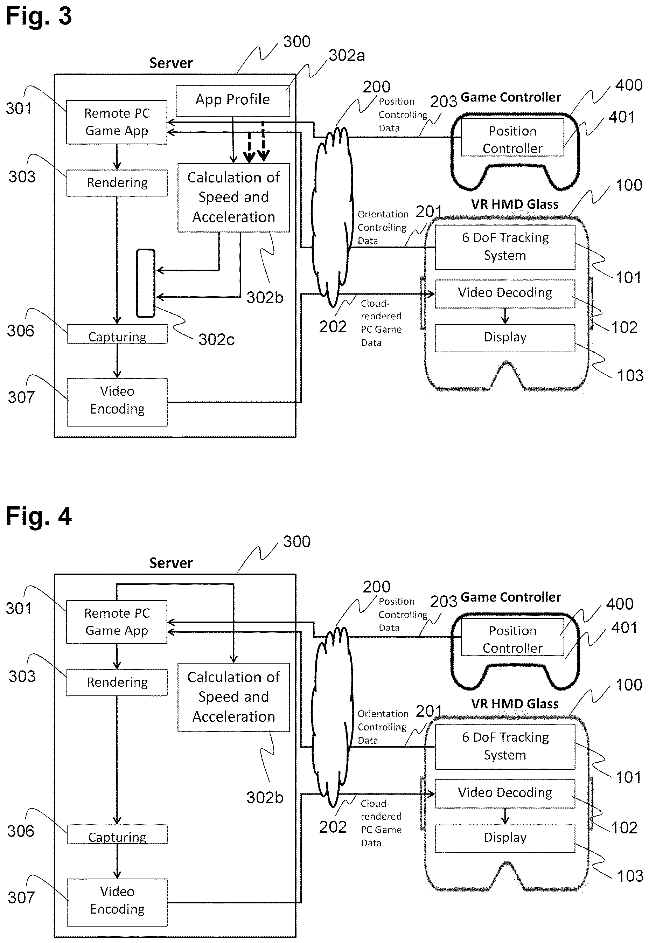

Fig. 3 shows a high-level architecture of a calculation of a weight factor of a method and a system according to an embodiment of the invention. The same reference signs as in Fig. 2 are used for the corresponding features in Fig. 3. After the initialization phase, as described above, the raw input data 203 from the position controller 401, dashed arrow, in the controller 400 is processed 302b at the server 300 to calculate weight factors 302c based on the speed and/or acceleration. The calculation will be detailed below. Additionally, or alternatively also the orientation controlling data 201 from the tracking system 101 of the VR HMD device may be used to calculate weight factors 302c based on the speed and/or acceleration.

As detailed above, the position controlling data 201 from the position controller may be different depending on the type of controller used. Accordingly, the app profile provides corresponding conversion data and/or rules to allow for a calculation of speed and/or acceleration. Additionally, or alternatively the app profile may be provided by the application 301. Additionally, or alternatively the app profile may be provided from a local or remote database or even user input.

Fig. 4 shows a high-level architecture of an initialization of a method and a system according to a further embodiment of the invention. Alternatively, or additionally to the initialization described with respect to Fig. 2, the initialization may also be based on an input from the application 301. This input may comprise application specific information on the interpretation of a specific controller input.

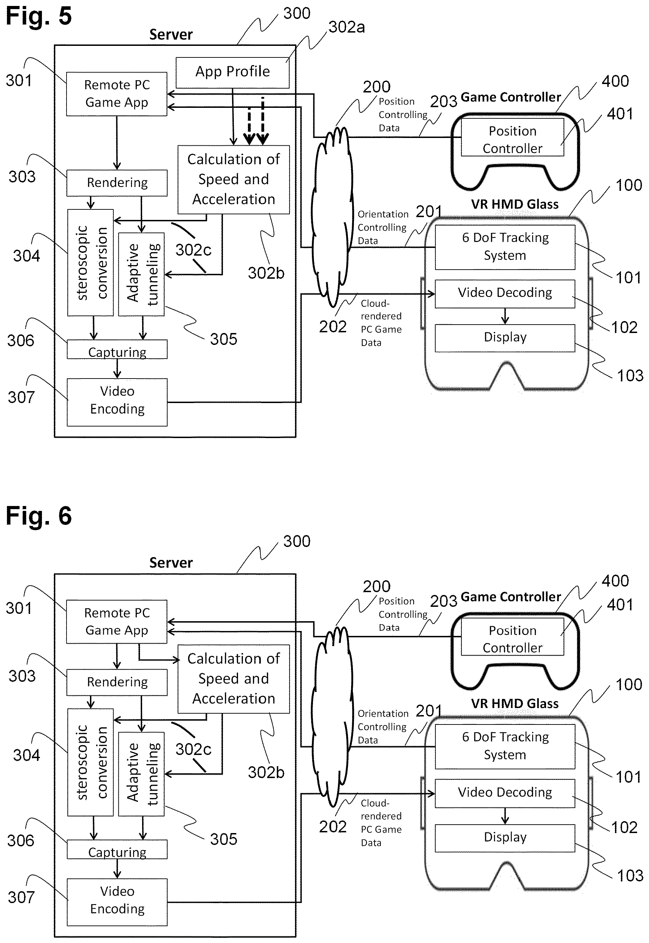

Fig. 5. shows a high-level architecture of a method and a system according to the invention. In particular, an implementation in a cloud-based gaming service is shown. The VR device 100 is a glasses type device. The VR device comprises a 6-DOF tracking system 101, a video decoding system 102 and display means 103. The tracking system 101 sends orientation controlling data 201 via the cloud 200 to the server 300.

The VR device 100 is connected to a cloud 200 and configured to transmit positional tracking data 201 from the 6-DoF tracking system to the cloud 200. The cloud comprises a server 300 or is connected to a server.

The game controller 400 comprises a position controller 401. The position controller sends position controlling data via the cloud 200 to the server.

The server 300 comprises a remote PC Game App 301, a rendering system 303, a video capturing system 306, and a video encoding system 307. The server 300 further comprises means to calculate a speed and/or acceleration 302b.

According to an embodiment of the invention, the calculation of the speed and/or acceleration of the VR user is based on a) the position controlling data 203 form the position controller 401 and/or the orientation controlling data 201 from the VR HMD device 100.

The server 300 further comprises first post processing means 304 configured to adaptively calculate real-time stereoscopic 3D conversion. The server 300 further comprises second post processing means 305 configured to adaptively calculate tunneling effect rendering.

At the server 300, based on the received data, a speed and/or acceleration of a VR user are calculated 302b and fed into the post-processing means for stereoscopic 3D conversion 304 and adaptive tunneling effect rendering 305. Preferably the calculated weight factors 302c are input into the post processing.

To complete the processing the post processed data is captured 306 and encoded 307. The encoded video data is transmitted 202 from the video encoding 307 via the cloud 200 to the VR HMD device. At the VR HMD device 100 the data is decoded in a video decoding system 102 and displayed via the display means of the VR HMD device 100.

Fig. 6 shows a high-level architecture of a method and a system according to a further embodiment of the invention. In this embodiment the position controlling data 203 and the orientation controlling data 201 are received by the application 301. The speed and/or acceleration are calculated based on an output of the application 301. Any further steps are the same as described above. This embodiment may also comprise an initialization phase, which may be based on an app profile and/or an input from the application 301, cf. Figs. 2 and 4 above.

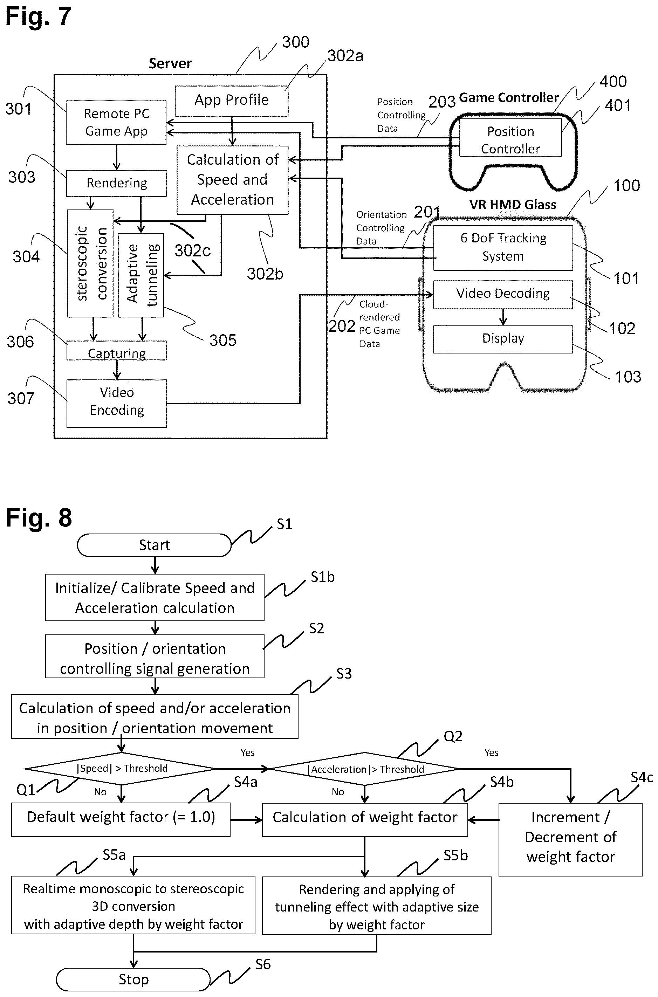

Fig. 7 shows a high-level architecture of a method and a system without a cloud according to a further embodiment of the invention. As detailed above, a method and a system according to the invention can also be implemented in a conventional, i.e. not cloud based, VR system. In this embodiment the server 300 is directly connected to the game controller 400 and the VR HMD device. This embodiment can be combined with all above described embodiments and any combination thereof. In particular, the initialization may be based on an app profile and/or an input from the application. Furthermore, the calculation of the speed and/or acceleration may be based on the received data 203 and/or 201 or an input from the application.

Fig. 8 shows a flow chart of a method according to an embodiment of the invention. In a first step S1 the method is started. Then the speed and/or acceleration calculation is initialized S1b. As detailed below, this may be based on an app profile and or an output from the application itself.

Based on the position controlling data 203 and/or the orientation controlling data 201 the speed and/or acceleration of the VR user is calculated in S3.

Then the post processing is controlled based on an analysis of the speed in Q1 and/or acceleration in Q2, preferably based on a threshold analysis. It is noted that the thresholds for speed and/or acceleration may be different thresholds. Furthermore, said thresholds may be predetermined, i.e. determined before S1, or dynamic, i.e. set or changed after S1.

In case the absolute value of the speed is smaller than a threshold in Q1 a default weight factor S4a, preferably a weight factor of 1.0, is used in the calculation of one or two weight factor(s) in S4b.

In case the absolute value of the speed is greater than or equal to the threshold in Q1 and the absolute value of the acceleration is smaller than the threshold in Q2, a weight factor is calculated in S4b, preferably the calculation is based on the positive or negative value of the acceleration.

In case the absolute value of the speed is greater than or equal to the threshold in Q1 and the absolute value of the acceleration is greater than the threshold in Q2, the increment/decrement parameters for the calculation of the weight factors is determined in S4c and used for recalculation of the weight factor in S4b. Preferably an increment and or decrement is calculated in S4c, preferably the calculation is based on the positive or negative value of the acceleration.

The default weight factor, the calculated weight factor or the recalculated weight factor is used for the real-time conversion of monoscopic with depth information to stereoscopic 3D in S5a and/or the rendering and application of the tunneling effect in S5b. Preferably the weight factor controls the degree of the stereoscopic conversion. Preferably the weight factor controls the size of the tunneling effect. Preferably two different weight factors are used for the conversion and the tunneling.

The method is ended in S6.

As noted above a first general embodiment relates to the control of only the stereoscopic conversion, a second general embodiment to the control of the tunneling effect, and a third embodiment relates to control of both the stereoscopic conversion and the tunneling effect. Both aspects can be controlled based on the speed and/or the acceleration of the VR user in the virtual world.

## Claims

1. A method for controlling a virtual reality, VR, device, comprising the steps of
a) generating a controller input signal with a controller device, wherein the controller input signal is directly obtainable from an input of the controller and relates to information about which key of the controller device is pressed and how often or how long the key is pressed;
b) calculating, based on the controller input signal, a speed and/or acceleration of a VR user in an VR environment;
d) adaptively controlling one or more post-processing transactions based on the speed and/or acceleration of the VR user in the VR environment; and
e) transferring the rendered VR data on the VR device for displaying, and
wherein the adaptively controlling comprises to adaptively control a level of stereoscopic 3D depth and/or a size of tunneling effect rendering.

2. A method for controlling a virtual reality, VR, device, in a cloud environment comprising the steps of
a) generating a controller input signal with a controller device, wherein the controller input signal is directly obtainable from an input of the controller and relates to information about which key of the controller device is pressed and how often or how long the key is pressed;
b) transferring the controller input to a server in the cloud environment;
c) calculating, in the cloud environment, based on the controller input, a speed and/or acceleration of a VR user in an VR environment;
d) adaptively controlling one or more post-processing transactions based on the speed and/or acceleration of the VR user in the VR environment; and
e) transmitting rendered VR data from the cloud environment; to the VR device for displaying, and
wherein the adaptively controlling comprises to adaptively control a level of stereoscopic 3D depth and/or a size of tunneling effect rendering.

3. The method according to claim 1 or claim 2, wherein, depending on the speed and/or acceleration of the VR user in the VR environment, the level of stereoscopic 3D depth is controlled and applied to its rendering post-processing; and/or
wherein at the maximum speed of positional movement a monoscopic image is rendered.

4. The method according to any one of claims 1 to 3, wherein, depending on the speed and/or acceleration of VR user in the VR environment, the size of tunneling effect is controlled and applied to its rendering post-processing; and/or
wherein at the maximum speed of positional movement, the size of tunneling effect is increased at the maximum level.

5. The method according to any one of claims 1 to 4, wherein a reduction or removal of stereoscopic 3D depth and the size of the tunneling effect is linearly changed based on a weight factor; and/or when a threshold is reached.

6. The method according to any one of claims 1 to 5, wherein the VR device is a head mounted device, preferably a glasses type device.

7. A system for controlling a virtual reality, VR, device, comprising
a) a controller unit configured to receive a controller input signal generated from a controller device, wherein the controller input signal is directly obtainable from an input of the controller and relates to information about which key of the controller device is pressed and how often or how long the key is pressed;
b) a calculation unit configured to receive, based on the controller input a speed and/or acceleration of a VR user in an VR environment;
d) a post-processing unit configured to adaptively control one or more post-processing transactions based on the speed and/or acceleration of the VR user in the VR environment; and
e) an output unit configured to transfer the rendered VR data on the VR device for displaying, and
wherein to adaptively control one or more post-processing transactions comprises to adaptively control a level of stereoscopic 3D depth and/or a size of tunneling effect rendering.

8. A system for controlling a virtual reality, VR, device, in a cloud environment comprising
a) a controller unit, configured to receive a controller input generated from a controller device, wherein the controller input signal is directly obtainable from an input of the controller and relates to information about which key of the controller device is pressed and how often or how long the key is pressed;
b) the controller unit further configured to transfer the controller input to a server in the cloud environment;
c) a calculation unit, in the cloud environment, configured to calculate based on the controller input, a speed and/or acceleration of a VR user in an VR environment;
d) a post-processing unit, in the cloud environment, configured to adaptively control the post-processing transactions based on the speed and/or acceleration of the VR user in the VR environment; and
e) an output unit, in the cloud environment, configured to transmit rendered VR data from the cloud environment; to the VR device for displaying, and
wherein to adaptively control one or more post-processing transactions comprises to adaptively control a level of stereoscopic 3D depth and/or a size of tunneling effect rendering.

9. The system according to claim 7 or claim 8, comprising means for carrying out the steps of the method according to any one of claims 1 to 6.

10. A computer program product comprising instructions which, when the program is executed by a system according to claim 7 or claim 8, cause the system to carry out the steps of the method according to any one of claims 1 to 6.

11. A computer-readable storage medium comprising instructions which, when executed by a system according to claim 7 or claim 8, cause the system to carry out the steps of the method according to any one of claims 1 to 6.

## Patentansprüche

1. Verfahren zum Steuern einer Virtuelle-Realität-Vorrichtung, VR-Vorrichtung, aufweisend die Schritte
a) Erzeugen eines Controller-Eingabesignals mit einer Controller-Vorrichtung, wobei das Controller-Eingabesignal von einer Eingabe des Controllers direkt erhältlich ist und sich auf Informationen darüber bezieht, welche Taste der Controller-Vorrichtung gedrückt wird und wie oft oder wie lange die Taste gedrückt wird;
b) Berechnen, basierend auf dem Controller-Eingabesignal, einer Geschwindigkeit und/oder Beschleunigung eines VR-Benutzers in einer VR-Umgebung;
d) adaptives Steuern einer oder mehrerer Nachbearbeitungstransaktionen basierend auf der Geschwindigkeit und/oder Beschleunigung des VR-Benutzers in der VR-Umgebung; und
e) Übertragen der gerenderten VR-Daten auf die VR-Vorrichtung zum Anzeigen und
wobei das adaptive Steuern aufweist, ein Niveau einer stereoskopischen 3D-Tiefe und/oder eine Größe des Tunneleffekt-Renderings adaptiv zu steuern.

2. Verfahren zum Steuern einer Virtuelle-Realität-Vorrichtung, VR-Vorrichtung, in einer Cloud-Umgebung, aufweisend die Schritte
a) Erzeugen eines Controller-Eingabesignals mit einer Controller-Vorrichtung, wobei das Controller-Eingabesignal von einer Eingabe des Controllers direkt erhältlich ist und sich auf Informationen darüber bezieht, welche Taste der Controller-Vorrichtung gedrückt wird und wie oft oder wie lange die Taste gedrückt wird;
b) Übertragen der Controller-Eingabe an einen Server in der Cloud-Umgebung;
c) Berechnen, in der Cloud-Umgebung, basierend auf der Controller-Eingabe, einer Geschwindigkeit und/oder Beschleunigung eines VR-Benutzers in einer VR-Umgebung;
d) adaptives Steuern einer oder mehrerer Nachbearbeitungstransaktionen basierend auf der Geschwindigkeit und/oder Beschleunigung des VR-Benutzers in der VR-Umgebung; und
e) Übermitteln gerenderter VR-Daten aus der Cloud-Umgebung; an die VR-Vorrichtung zum Anzeigen und
wobei das adaptive Steuern aufweist, ein Niveau der stereoskopischen 3D-Tiefe und/oder eine Größe des Tunneleffekt-Renderings adaptiv zu steuern.

3. Verfahren nach Anspruch 1 oder 2, wobei, abhängig von der Geschwindigkeit und/oder Beschleunigung des VR-Benutzers in der VR-Umgebung, das Niveau der stereoskopischen 3D-Tiefe gesteuert und auf dessen Rendering-Nachbearbeitung angewendet wird; und/oder
wobei bei der maximalen Geschwindigkeit einer Positionsbewegung ein monoskopisches Bild gerendert wird.

4. Verfahren nach einem der Ansprüche 1 bis 3, wobei, abhängig von der Geschwindigkeit und/oder Beschleunigung des VR-Benutzers in der VR-Umgebung, die Größe des Tunneleffekts gesteuert und auf dessen Rendering-Nachbearbeitung angewendet wird; und/oder
wobei bei der maximalen Geschwindigkeit der Positionsbewegung die Größe des Tunneleffekts auf das maximale Niveau erhöht wird.

5. Verfahren nach einem der Ansprüche 1 bis 4, wobei eine Reduzierung oder Entfernung der stereoskopischen 3D-Tiefe und der Größe des Tunneleffekts basierend auf einem Gewichtungsfaktor; und/oder wenn eine Schwelle erreicht ist, linear geändert wird.

6. Verfahren nach einem der Ansprüche 1 bis 5, wobei die VR-Vorrichtung eine an dem Kopf getragene Vorrichtung, vorzugsweise eine brillenartige Vorrichtung, ist.

7. System zum Steuern einer Virtuelle-Realität-Vorrichtung, VR-Vorrichtung, aufweisend
a) eine Controller-Einheit, die konfiguriert ist, um ein Controller-Eingabesignal zu empfangen, das von einer Controller-Vorrichtung erzeugt wird, wobei das Controller-Eingabesignal von einer Eingabe des Controllers direkt erhältlich ist und sich auf Informationen darüber bezieht, welche Taste der Controller-Vorrichtung gedrückt wird und wie oft oder wie lange die Taste gedrückt wird;
b) eine Berechnungseinheit, die konfiguriert ist, um, basierend auf der Controller-Eingabe, eine Geschwindigkeit und/oder Beschleunigung eines VR-Benutzers in einer VR-Umgebung zu empfangen;
d) eine Nachbearbeitungseinheit, die konfiguriert ist, um eine oder mehrere Nachbearbeitungstransaktionen basierend auf der Geschwindigkeit und/oder Beschleunigung des VR-Benutzers in der VR-Umgebung adaptiv zu steuern; und
e) eine Ausgabeeinheit, die konfiguriert ist, um die gerenderten VR-Daten auf die VR-Vorrichtung zum Anzeigen zu übertragen, und
wobei das adaptive Steuern einer oder mehrerer Nachbearbeitungstransaktionen aufweist, ein Niveau der stereoskopischen 3D-Tiefe und/oder eine Größe des Tunneleffekt-Renderings adaptiv zu steuern.

8. System zum Steuern einer Virtuelle-Realität-Vorrichtung, VR-Vorrichtung, in einer Cloud-Umgebung, aufweisend
a) eine Controller-Einheit, die konfiguriert ist, um eine Controller-Eingabe zu empfangen, die von einer Controller-Vorrichtung erzeugt wird, wobei das Controller-Eingabesignal von einer Eingabe des Controllers direkt erhältlich ist und sich auf Informationen darüber bezieht, welche Taste der Controller-Vorrichtung gedrückt wird und wie oft oder wie lange die Taste gedrückt wird;
b) wobei die Controller-Einheit ferner konfiguriert ist, um die Controller-Eingabe an einen Server in der Cloud-Umgebung zu übertragen;
c) eine Berechnungseinheit, in der Cloud-Umgebung, die konfiguriert ist, um basierend auf der Controller-Eingabe eine Geschwindigkeit und/oder Beschleunigung eines VR-Benutzers in einer VR-Umgebung zu berechnen;
d) eine Nachbearbeitungseinheit, in der Cloud-Umgebung, die konfiguriert ist, um die Nachbearbeitungstransaktionen basierend auf der Geschwindigkeit und/oder Beschleunigung des VR-Benutzers in der VR-Umgebung adaptiv zu steuern; und
e) eine Ausgabeeinheit, in der Cloud-Umgebung, die konfiguriert ist, um gerenderte VR-Daten von der Cloud-Umgebung; an die VR-Vorrichtung zum Anzeigen zu übermitteln, und
wobei das adaptive Steuern einer oder mehrerer Nachbearbeitungstransaktionen aufweist, ein Niveau der stereoskopischen 3D-Tiefe und/oder eine Größe des Tunneleffekt-Renderings adaptiv zu steuern.

9. System nach Anspruch 7 oder 8, aufweisend Mittel zum Durchführen der Schritte des Verfahrens nach einem der Ansprüche 1 bis 6.

10. Computerprogrammprodukt, aufweisend Anweisungen, die, wenn das Programm durch ein System nach Anspruch 7 oder 8 ausgeführt wird, das System veranlassen, die Schritte des Verfahrens nach einem der Ansprüche 1 bis 6 durchzuführen.

11. Computerlesbares Speichermedium, aufweisend Anweisungen, die, wenn sie durch ein System nach Anspruch 7 oder 8 ausgeführt werden, das System veranlassen, die Schritte des Verfahrens nach einem der Ansprüche 1 bis 6 durchzuführen.

## Revendications

1. Procédé pour la commande d'un dispositif de réalité virtuelle, RV, comprenant les étapes consistant à
a) générer un signal d'entrée de commande avec un dispositif de type commande, dans lequel le signal d'entrée de commande peut être obtenu directement à partir d'une entrée de la commande et se rapporte à des informations concernant la touche du dispositif de type commande qui est enfoncée et la fréquence ou la durée de l'enfoncement de la touche ;
b) calculer, sur la base du signal d'entrée de commande, une vitesse et/ou une accélération d'un utilisateur de RV dans un environnement de RV ;
d) commander de manière adaptative une ou plusieurs transactions de post-traitement en fonction de la vitesse et/ou de l'accélération de l'utilisateur de RV dans l'environnement de RV ; et
e) transférer les données de RV rendues sur le dispositif de RV pour l'affichage, et
dans lequel la commande de manière adaptative comprend le fait de commander de manière adaptative un niveau de profondeur 3D stéréoscopique et/ou une taille de rendu de l'effet tunnel.

2. Procédé pour la commande d'un dispositif de réalité virtuelle, RV, dans un environnement en nuage comprenant les étapes consistant à
a) générer un signal d'entrée de commande avec un dispositif de type commande, dans lequel le signal d'entrée de commande peut être obtenu directement à partir d'une entrée de la commande et se rapporte à des informations concernant la touche du dispositif de type commande qui est enfoncée et la fréquence ou la durée de l'enfoncement de la touche ;
b) transférer l'entrée de commande à un serveur dans l'environnement en nuage ;
c) calculer, dans l'environnement en nuage, en fonction de l'entrée de commande, une vitesse et/ou une accélération d'un utilisateur de RV dans un environnement de RV ;
d) commander de manière adaptative une ou plusieurs transactions de post-traitement en fonction de la vitesse et/ou de l'accélération de l'utilisateur de RV dans l'environnement de RV ; et
e) transmettre des données de RV rendues à partir de l'environnement en nuage ; au dispositif de RV pour l'affichage, et
dans lequel la commande de manière adaptative comprend le fait de commander de manière adaptative un niveau de profondeur 3D stéréoscopique et/ou une taille de rendu de l'effet tunnel.

3. Procédé selon la revendication 1 ou la revendication 2, dans lequel, en fonction de la vitesse et/ou de l'accélération de l'utilisateur de RV dans l'environnement de RV, le niveau de profondeur 3D stéréoscopique est commandé et appliqué à son post-traitement de rendu ; et/ou
dans lequel, à la vitesse maximale de mouvement de position, une image monoscopique est rendue.

4. Procédé selon l'une quelconque des revendications 1 à 3, dans lequel, en fonction de la vitesse et/ou de l'accélération de l'utilisateur de RV dans l'environnement de RV, la taille de l'effet tunnel est commandée et appliquée à son post-traitement de rendu ; et/ou
dans lequel, à la vitesse maximale de mouvement de position, la taille de l'effet tunnel est augmentée au niveau maximal.

5. Procédé selon l'une quelconque des revendications 1 à 4, dans lequel une réduction ou une suppression de la profondeur 3D stéréoscopique et de la taille de l'effet tunnel est modifiée linéairement en fonction d'un facteur de pondération ; et/ou lorsqu'un seuil est atteint.

6. Procédé selon l'une quelconque des revendications 1 à 5, dans lequel le dispositif de RV est un dispositif monté sur la tête, de préférence un dispositif de type lunettes.

7. Système pour la commande d'un dispositif de réalité virtuelle, RV, comprenant
a) une unité de commande configurée pour recevoir un signal d'entrée de commande généré à partir d'un dispositif de type commande, dans lequel le signal d'entrée de commande peut être obtenu directement à partir d'une entrée de la commande et se rapporte à des informations concernant la touche du dispositif de type commande qui est enfoncée et la fréquence ou la durée de l'enfoncement de la touche ;
b) une unité de calcul configurée pour recevoir, sur la base de l'entrée de commande, une vitesse et/ou une accélération d'un utilisateur de RV dans un environnement de RV ;
d) une unité de post-traitement configurée pour commander de manière adaptative une ou plusieurs transactions de post-traitement en fonction de la vitesse et/ou de l'accélération de l'utilisateur de RV dans l'environnement de RV ; et
e) une unité de sortie configurée pour transférer les données de RV rendues sur le dispositif de RV pour l'affichage, et
dans lequel la commande de manière adaptative d'une ou de plusieurs transactions de post-traitement comprend la commande de manière adaptative d'un niveau de profondeur 3D stéréoscopique et/ou d'une taille de rendu de l'effet tunnel.

8. Système pour la commande d'un dispositif de réalité virtuelle, RV, dans un environnement en nuage, comprenant
a) une unité de commande, configurée pour recevoir une entrée de commande générée à partir d'un dispositif de type commande, dans lequel le signal d'entrée de commande peut être obtenu directement à partir d'une entrée de la commande et se rapporte à des informations concernant la touche du dispositif de type commande qui est enfoncée et la fréquence ou la durée de l'enfoncement de la touche ;
b) l'unité de commande étant en outre configurée pour transférer l'entrée de commande à un serveur dans l'environnement en nuage ;
c) une unité de calcul, dans l'environnement en nuage, configurée pour calculer, en fonction de l'entrée de commande, une vitesse et/ou une accélération d'un utilisateur de RV dans un environnement de RV ;
d) une unité de post-traitement, dans l'environnement en nuage, configurée pour commander de manière adaptative les transactions de post-traitement en fonction de la vitesse et/ou de l'accélération de l'utilisateur de RV dans l'environnement de RV ; et
e) une unité de sortie, dans l'environnement en nuage, configurée pour transmettre des données de RV rendues à partir de l'environnement en nuage ; au dispositif de RV pour l'affichage, et
dans lequel la commande de manière adaptative d'une ou de plusieurs transactions de post-traitement comprend la commande de manière adaptative d'un niveau de profondeur 3D stéréoscopique et/ou d'une taille de rendu de l'effet tunnel.

9. Système selon la revendication 7 ou la revendication 8, comprenant un moyen destiné à réaliser les étapes du procédé selon l'une quelconque des revendications 1 à 6.

10. Produit-programme informatique comprenant des instructions qui, lorsque le programme est exécuté par un système selon la revendication 7 ou la revendication 8, amènent le système à réaliser les étapes du procédé selon l'une quelconque des revendications 1 à 6.

11. Support de stockage lisible par ordinateur comprenant des instructions qui, lorsqu'elles sont exécutées par un système selon la revendication 7 ou la revendication 8, amènent le système à réaliser les étapes du procédé selon l'une quelconque des revendications 1 à 6.
